# EUROPEAN PATENT APPLICATION

(11) **EP 3 550 378 A1**
(43) Date of publication of application: **09.10.2019**
(21) Application number: 19159136.1
(22) Date of filing: 25.02.2019
(51) Int. Cl.: G03G 21/00, G03G 21/02, G06F 3/12

(54) **QUOTA MANAGEMENT APPARATUS, QUOTA MANAGEMENT METHOD AND NON-TEMPORARY RECORDING MEDIUM**

(30) Priority: 01.03.2018 US 201815909904
(71) Applicant: Kabushiki Kaisha Toshiba, Minato-ku Tokyo 105-8001 (JP); Toshiba Tec Kabushiki Kaisha, 141-8562 Tokyo (JP)
(72) Inventor: TSUEDA, Yoshinori, Shinagawa-ku,, Tokyo 141-8562 (JP)
(74) Representative: Fédit-Loriot

(57) **Abstract**

A quota management apparatus includes a management section (15, 16). The management section manages a value of a printing quota indicating a usable amount of an image forming apparatus (221, 222) by a user according to an image forming instruction by the user. If the image forming apparatus forms an image on a sheet on which an image is erased, the management section performs either a control of subtracting a value smaller than that in a case in which the image forming apparatus forms the image on a sheet on which the erasing of an image is not executed from the value of the printing quota, or a control of not subtracting the value of the printing quota.

## Description

### FIELD

Embodiments described herein relate generally to a quota management apparatus, a quota management method and a non-temporary recording medium.

### BACKGROUND

Conventionally, a toner decolorized when heated to a temperature equal to or higher than a predetermined temperature (hereinafter, referred to as "decolorable toner") is developed. Accordingly, an image forming apparatus capable of executing printing by using a decolorable toner and a decoloring apparatus which decolorizes the image printed with the decolorable toner are developed. The decolorized sheet is reusable in a new printing processing, which is economical for a user and can reduce an environmental burden at the same time. In order to promote the reuse of such a sheet, there is a need for giving an incentive to use the image forming apparatus for a user who reuses the sheet.

### SUMMARY OF INVENTION

To solve such problem, there is provided a quota management apparatus, comprising: a management section configured to manage a printing quota value indicating an amount of permitted use of an image forming apparatus by a user according to an image forming instruction by the user; wherein if the image forming apparatus forms an image on a sheet upon which a prior image had been erased based on information indicating that the sheet is reusable, the management section performs either: an operation of subtracting a first value from the printing quota value, wherein the first value is smaller than a second value that would be subtracted from the printing quota value when the image forming apparatus forms the image on an unused sheet, or an operation of not subtracting from the printing quota value of the printing quota.

Preferably, the management section is configured to increase the printing quota value of the user according to a usage amount if the user uses a decoloring apparatus for erasing images on sheets.

Preferably still, the management section is configured to increase the printing quota value within a range not exceeding a predetermined maximum amount.

Preferably yet, the management section is configured to enable the image forming apparatus to display information related to the printing quota value of each user.

Suitably, the quota management apparatus further comprises: a determining section configured to determine whether the sheet upon which the prior image had been erased by the decoloring apparatus is reusable.

Suitably still, when the determining section determines that the sheet upon which the prior image had been erased is not reusable, the management section is configured to increase the printing quota value by a third value, where the third value is smaller than a fourth value that would be increased to the printing quota value when the determining section determines that the sheet upon which the prior image had been erased is reusable.

Suitably yet, when the determining section determines that the sheet upon which the prior image had been erased is not reusable, the management section is configured to increase the printing quota value of the user of the decoloring apparatus by the third value, where the third value is smaller than an added value of the printing quota value of the user when the determining section determines that the sheet upon which the prior image had been erased is reusable.

Typically, the quota management apparatus further comprises: a first housing section configured to accommodate a sheet upon which the prior image had been erased by a decoloring apparatus; and a second housing section configured to accommodate a sheet upon which the prior image had not been erased by the decoloring apparatus, wherein if the image is formed on a sheet supplied from the first housing section, the management section performs either: a control of subtracting the first value from the printing quota value, with the first value being smaller than the second value where the image is formed on the sheet supplied from the second housing section or a control of not subtracting from the printing quota value is performed.

The invention also relates to a quota management method, including: managing a printing quota value indicating a usable amount of an image forming apparatus by a user according to an image forming instruction by the user, wherein if the image forming apparatus forms an image on a sheet upon which a prior image had been erased, performing either: a step of subtracting a first value from the printing quota value, with the first value being smaller than a second value where the image forming apparatus forms the image on a sheet on which erasing of the prior image is not executed, or a step of not subtracting from the printing quota value.

Preferably, the quota management method further comprises: increasing the printing quota value of the user according to a usage amount if the user uses a decoloring apparatus for erasing images on sheets.

Preferably still, the quota management method further comprises: increasing the printing quota value within a range not exceeding a predetermined maximum amount.

Preferably yet, the quota management method further comprises: displaying information relating to the printing quota value of each user.

Suitably, the quota management method further comprises: determining whether the sheet upon which the prior image had been erased by the decoloring apparatus is reusable.

Suitably still, in the quota management method, when the sheet upon which the prior image had been erased is not reusable, increasing the printing quota value by a third value, where the third value is smaller than a fourth value when the sheet upon which the prior image had been erased is reusable.

Suitably yet, in the quota management method, when the sheet upon which the prior image had been erased is not reusable, increasing the printing quota value of the user of the decoloring apparatus by the third value, where the third value is smaller than the fourth value of the printing quota value of the user when the sheet upon which the prior image had been erased is reusable.

The invention also concerns a non-transitory, computer readable recording medium configured to enable a computer to manage a printing quota value indicating a usable amount of an image forming apparatus by a user according to an image forming instruction by the user, and which stores at least one program for enabling the computer to perform either: a control of subtracting a first value from the printing quota value, with the first value being smaller than a second value where the image forming apparatus forms the image on a sheet on which erasing of a prior image is not executed, or a control of not subtracting from the printing quota value.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram illustrating a specific example of the constitution of a printing system according to an embodiment;
Fig. 2 is a block diagram illustrating a specific example of the functional components of a printing management server according to the present embodiment;
Fig. 3 is a diagram illustrating a specific example of user information according to the present embodiment;
Fig. 4 is a diagram illustrating a specific example of quota management information according to the present embodiment;
Fig. 5 is a block diagram illustrating a specific example of the functional components of a decoloring apparatus according to the present embodiment;
Fig. 6 is a diagram illustrating a specific example of a determination mark according to the present embodiment;

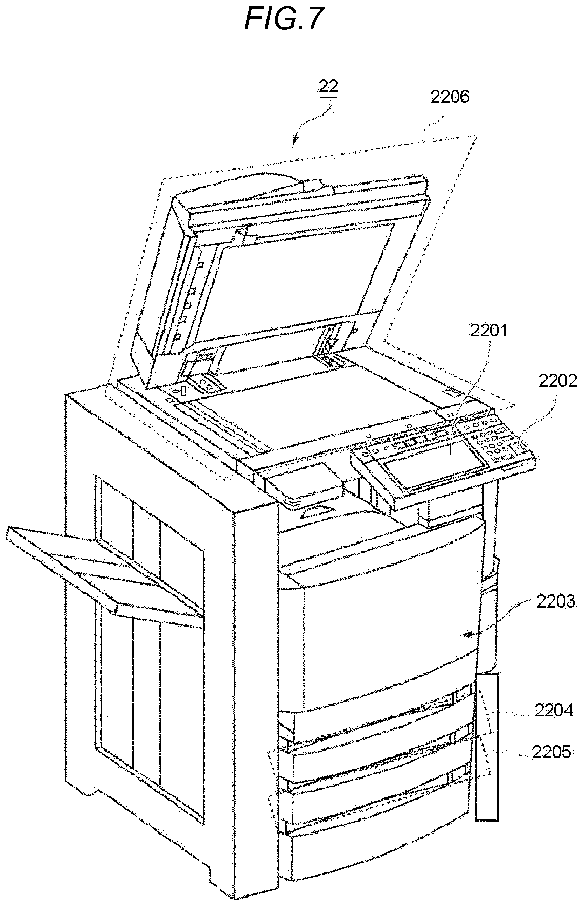

Fig. 7 is an external view exemplifying the overall constitution of an image processing apparatus according to the present embodiment;
Fig. 8 is a block diagram illustrating a specific example of the functional components of the image processing apparatus according to the present embodiment;
Fig. 9 is a flowchart illustrating the flow of a processing in which the printing management server registers a management target device in its own device according to the present embodiment;
Fig. 10 is a diagram illustrating an example of a screen displayed on a user terminal at the time of registering the management target device according to the present embodiment;
Fig. 11 is a diagram illustrating an example of a screen displayed on the user terminal at the time of registering the management target device according to the present embodiment;
Fig. 12 is a flowchart depicting the flow of a processing in which the printing management server registers a user of the printing system in its own device according to the present embodiment;
Fig. 13 is a flowchart depicting the flow of a processing for limiting usage amount of the management target device by the user in the printing system according to the present embodiment;
Fig. 14 is a flowchart depicting the flow of a processing of giving an incentive to use the management target device for a user who reuses a sheet in the printing system according to the present embodiment;
Fig. 15 is a flowchart depicting the flow of a decoloring processing in the printing system according to the present embodiment; and
Fig. 16 is a flowchart depicting the flow of the decoloring processing in the printing system according to the present embodiment.

### DETAILED DESCRIPTION

In accordance with an embodiment, a quota management apparatus comprises a management section. The management section manages a value of a printing quota indicating a usable amount of an image forming apparatus by a user according to an image forming instruction by the user. If the image forming apparatus forms an image on a sheet on which an image is erased, the management section performs either control of subtracting a value smaller than that in a case in which the image forming apparatus forms the image on a sheet on which the erasing of an image is not executed from a value of the printing quota, or control of not subtracting the value of the printing quota.

Hereinafter, an embodiment of a quota management apparatus is described with reference to the accompanying drawings. A "value of a printing quota" in the present embodiment is a value of a quota which limits the use of a printing function. In general, the value of the quota is a value that limits the use of each function of a plurality of functions included by an image forming apparatus such as a copy function, a scanning function, a printing function, a fax function, and the like, and is a value that can be set for each function. The quota management apparatus of the present embodiment manages a quota value that limits the use of the printing function among quota values that can be set for each function of the image forming apparatus.

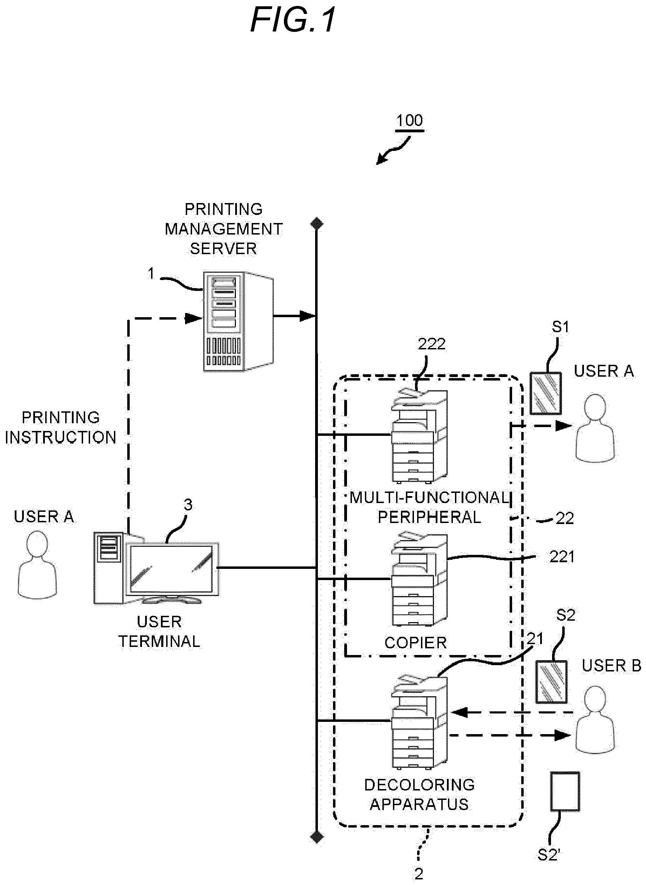

Fig. 1 is a diagram illustrating a specific example of the constitution of a printing system 100 according to the present embodiment. The printing system 100 includes a printing management server 1, a management target device 2 and a user terminal 3. The printing management server 1, the management target device 2 and the user terminal 3 are provided with communication functions to be able to communicate with each other. The printing management server 1 manages a usage amount of the management target device 2 by a user. Fig. 1 shows a decoloring apparatus 21 and image processing apparatuses 22 as examples of the management target device 2. Fig. 1 shows a copier 221 and a multi-functional peripheral 222 as examples of the image processing apparatus 22. The copier 221 and the multi-functional peripheral 222 are also examples of the image forming apparatus. The printing management server 1 may manage any usage amount relating to the use of the management target device 2, but the usage fee of the copier 221 or the multi-functional peripheral 222 is often charged according to the number of sheets on which the printing and copying are generally executed. Therefore, it is assumed that the printing management server 1 according to the present embodiment manages the number of sheets printed or copied by using the copier 221 and the multi-functional peripheral 222 by each user as the usage amount.

The user terminal 3 is used by a user to use the printing system 100. The user terminal 3 may be a PC (Personal Computer) or an information terminal such as a smartphone or a tablet. For example, the user can use the user terminal 3 to instruct the management target device 2 to execute a processing such as printing, copying, decoloring and the like. For example, Fig. 1 shows that user A instructs the multi-functional peripheral 222 to execute a printing processing by using the user terminal 3 and acquires a printed sheet S1 from the multi-functional peripheral 222. For example, by accessing the printing management server 1 with the user terminal 3, the user can add or delete the management target device 2 or a user, edit user information or device information, etc.

The management target device 2 is not necessarily operated via the user terminal 3, and may be a device that can be directly operated by a user. For example, Fig. 1 shows that an execution instruction of the decoloring processing is input to the decoloring apparatus 21 by a direct operation of a user B. S2 in Fig. 1 indicates a sheet to be subjected to a decoloring processing and S2' indicates a sheet subjected to the decoloring processing. The user B can enable the decoloring apparatus 21 to process the sheet S2 printed by using a decolorable toner to obtain a sheet S2' on which the image formed by the decolorable toner is erased (decolorized). In this manner, the management target device 2 executes each processing such as the printing, the copying, the decoloring and the like in response to an execution instruction directly or indirectly input by the user.

On the other hand, the management target device 2 notifies the printing management server 1 of a use status of its own device by each user. The printing management server 1 manages the usage amount of the management target device 2 for each user based on the use status of each user notified from each management target device 2.

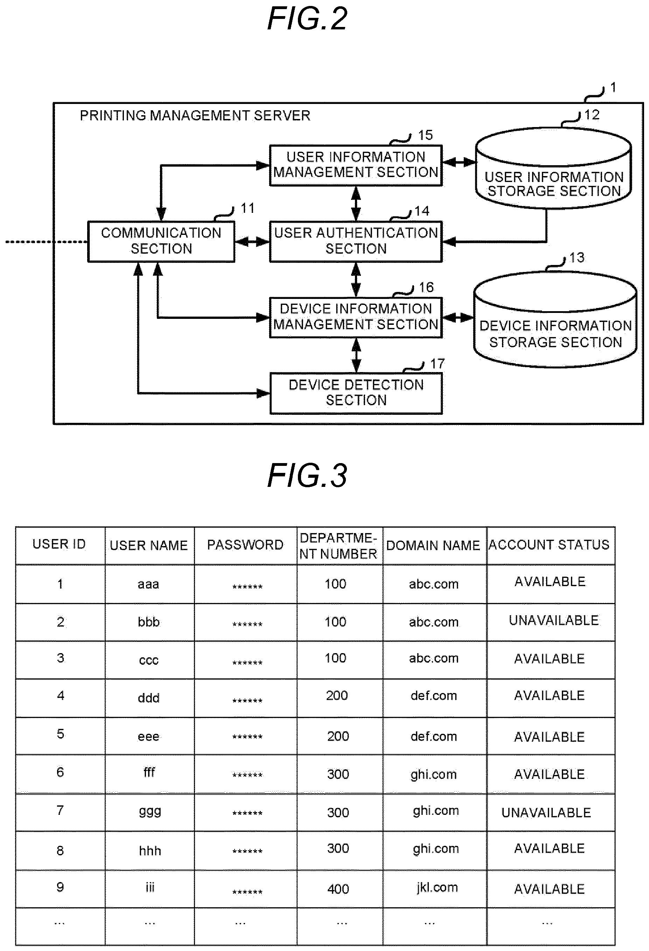

Fig. 2 is a block diagram illustrating a specific example of the functional components of the printing management server 1 according to the present embodiment. The printing management server 1 includes a CPU (Central Processing Unit), a memory, and an auxiliary storage device which are connected via a bus line, and executes programs. The printing management server 1 executes the programs to function as a device including a communication section 11, a user information storage section 12, a device information storage section 13, a user authentication section 14, a user information management section 15, a device information management section 16 and a device detection section 17. All or a part of the functions of the printing management server 1 may be realized by using hardware such as an ASIC (Application Specific Integrated Circuit), a PLD (Programmable Logic Device) and a FPGA (Field Programmable Gate Array). The program may be recorded in a computer-readable recording medium. The computer-readable recording medium is, for example, a portable medium such as a flexible disk, a magneto-optical disk, a ROM, a CD-ROM or the like, or a storage device such as a hard disk built in a computer system. The program may be transmitted via an electric communication line.

The communication section 11 includes a communication interface. The communication section 11 is capable of communicating with each device of the printing system 100 and the user terminal 3.

The user information storage section 12 and the device information storage section 13 are constituted by using storage devices such as a magnetic hard disk device and a semiconductor storage device. The user information storage section 12 stores user information, and the device information storage section 13 stores device information. The user information relates to a user who uses the printing system 100. The user information includes authentication information and quota management information of each user. The authentication information is necessary for the user to log in to the printing system 100. For example, the authentication information indicates a user ID and a password of each user. The quota management information is used for managing the usage amount of each user. The device information relates to various management target devices 2 included in the printing system 100.

The user authentication section 14 has a function of authenticating a user who accesses the user authentication section 14. Specifically, based on the authentication information of each user stored in the user information storage section 12, the user authentication section 14 executes an authentication processing of a user who accesses a user management function and the device management function of the user authentication section 14 and switches an authentication state of each user to either an authentication state or a non-authentication state. The user authentication section 14 permits access to the user management function and the device management function only for a user in the authentication state.

The user information management section 15 has a function of managing the user information. Specifically, the user information management section 15 has a function of providing a management interface of the user information to the user, and registering or updating the user information according to the input by the user. The user information management section 15 has a function of updating the user information based on information communication with the management target device 2.

The device information management section 16 has a function of managing the device information. Specifically, the device information management section 16 has a function of providing a management interface of the device information to the user, and registering or updating the device information according to the input by the user.

The device detection section 17 has a function of detecting a device existing on the network and capable of being registered as the management target device 2 of the printing system 100 (hereinafter referred to as a "registrable device"). The device detection section 17 tries to detect the registrable device in response to the request of the device information management section 16 and responds to the device information management section 16 with the detection result.

Fig. 3 is a diagram illustrating a specific example of the user information according to the present embodiment. For example, the user information is stored in the user information storage section 12 in a form of a user information table shown in Fig. 3. The user information table has a user information record for each user ID. The user information record has values of a user ID, a user name, a password, a department number, a domain name and an account status. The user ID is used for identifying a user of the printing system 100. The user name represents a name of the user identified by the user ID. The password represents a password for a user identified by the user ID to log in to the printing system 100. The department number is an identification number of a department to which the user identified by the user ID belongs. The domain name represents a domain to which the user identified by the user ID belongs. The account status represents a status of an account of the user identified by the user ID. The account status of the user is switched to either an available state or an unavailable state. The account status may be changed mechanically based on predetermined conditions or may be changed manually by a system administrator.

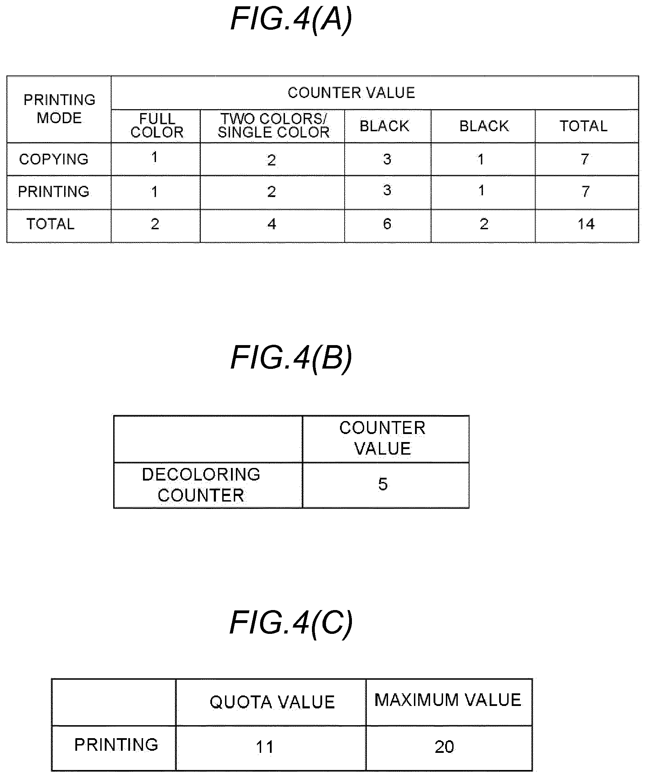

Fig. 4 is a diagram illustrating a specific example of the quota management information according to the present embodiment. For example, the quota management information is stored in the user information storage section 12 in the form of a printing counter table shown in Fig. 4(A), a decoloring counter table shown in Fig. 4(B), and a printing quota table shown in Fig. 4(C). The printing counter table stores the number of execution times of each process of printing and copying performed by using the management target device 2. Fig. 4 (A) shows an example of the printing counter table storing the number of execution times (counter value) of each processing type such as the printing and the copying in each printing mode such as "full color", "two colors / single color" and "black". As shown in an example in Fig. 4(A), the printing counter table may have a row and a column showing the total number of execution times in each row and each column ("total" in Fig. 4).

The decoloring counter table stores the number of execution times of the decoloring processing executed by using the management target device 2. The printing quota table stores a value of the printing quota and a maximum value (an example of a maximum amount) thereof. The maximum value of the printing quota is an initial value of the printing quota, and the printing quota is obtained by subtracting one each time either the printing processing or the copying processing is executed. In other words, the printing quota represents the remaining number of times the user can execute the printing or the copying. The quota management information described above is managed for each user of the printing system 100.

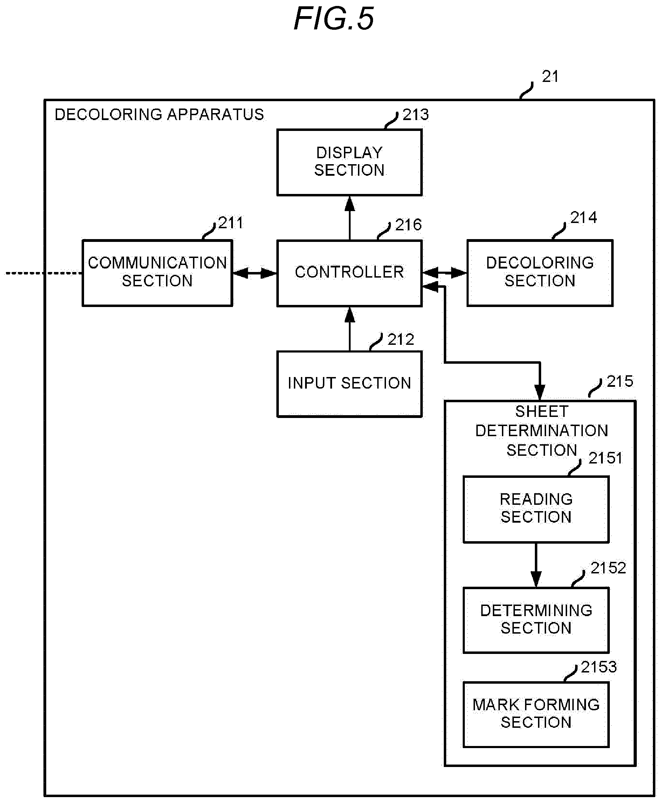

Fig. 5 is a block diagram illustrating a specific example of the functional components of the decoloring apparatus 21 according to the present embodiment. The decoloring apparatus 21 includes a CPU, a memory and an auxiliary storage device which are connected by a bus line, and executes programs. The decoloring apparatus 21 functions as a device including a communication section 211, an input section 212, a display section 213, a decoloring section 214, a sheet determination section 215 and a controller 216 by executing the programs. All or a part of the functions of the decoloring apparatus 21 may be realized by using hardware such as an ASIC, a PLD, a FPGA or the like. The program may be recorded in a computer-readable recording medium. The computer-readable recording medium is, for example, a portable medium such as a flexible disk, a magneto-optical disk, a ROM, a CD-ROM or the like, or a storage device such as a hard disk built in a computer system. The program may be transmitted via an electric communication line.

The communication section 211 includes a communication interface. The communication section 211 is capable of communicating with each device of the printing system 100 and the user terminal 3.

The input section 212 includes input devices such as a mouse, a keyboard, a touch panel, and the like. The input section 212 receives an input by the user on the input section 212. For example, in the decoloring apparatus 21, the input section 212 receives an execution instruction of the decoloring processing and input of various settings on the decoloring processing. The input section 212 outputs the input information by the user to the controller 216.

The display section 213 includes a display device such as a CRT (Cathode Ray Tube) display, a liquid crystal display, an organic EL (Electro-Luminescence) display, a touch panel, and the like. The display section 213 displays information output from the controller 216. For example, in the decoloring apparatus 21, the display section 213 displays various information relating to the decoloring processing, such as various menu screens and the execution result of the decoloring processing.

The decoloring section 214 has various functional sections for realizing the decoloring processing. For example, the decoloring section 214 includes a heating section that heats a sheet on which an image to be decolorized is formed at a predetermined temperature to decolorize an image on the sheet formed by the decolorable toner. The predetermined temperature is a temperature at which the decolorable toner is decolorized.

The sheet determination section 215 includes various functional sections for realizing a reuse determination processing for determining whether or not the sheet on which the decoloring processing is already executed by the decoloring section 214 is reusable. Specifically, the sheet determination section 215 includes a reading section 2151, a determining section 2152 and a mark forming section 2153. The reading section 2151 includes sensors such as an optical sensor, for example. The reading section 2151 reads a sheet with the sensor. The reading section 2151 generates image data of the read sheet. The reading section 2151 outputs the generated image data to the determining section 2152. The determining section 2152 can be, for example, provided by the CPU. Based on the acquired image data, the determining section 2152 determines whether or not the sheet on which the decoloring processing is executed by the decoloring section 214 is reusable. A determination method by the determining section 2152 may be any determination method as long as it can determine whether or not the sheet on which the decoloring processing is already executed by the decoloring section 214 is reusable. For example, whether a predetermined mark is present at a predetermined position on the sheet based on the acquired image data is determined, and based on the determination result, whether the sheet is reusable may be determined.

The mark forming section 2153 forms, on the sheet, a mark (hereinafter referred to as a "determination mark") indicating whether or not the sheet on which the decoloring processing is already executed by the decoloring section 214 is reusable. The determination mark may be formed at any position on the sheet or any mark as long as it is a mark with which the determining section 2152 can make the determination. For example, the determination mark may be a dot formed at a corner of the sheet. The mark formed by the mark forming section 2153 may be formed by, for example, an inkjet system or a toner system.

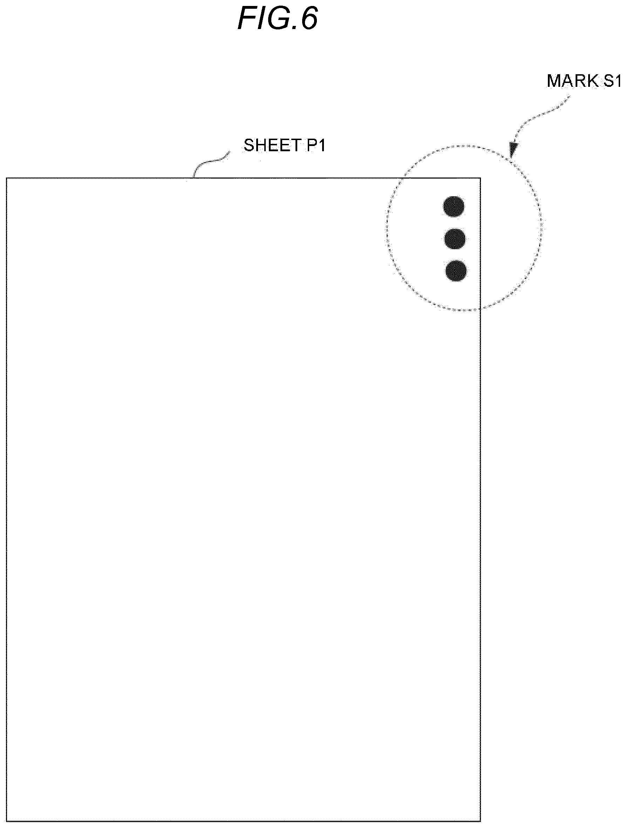

Fig. 6 is a diagram illustrating a specific example of the determination mark according to the present embodiment. In Fig. 6, a mark S1 with three dots is a determination mark. In Fig. 6, the number of dots of the mark S1 may indicate the number of times the decoloring processing by the decoloring section 214 is executed on the sheet P1.

The controller 216 controls the execution of the decoloring processing with the decoloring section 214 based on the input information by the user output from the input section 212. The controller 216 may display various information relating to the decoloring processing on the display section 213. The controller 216 operates in conjunction with the printing management server 1 to increase the value of the printing quota of the user according to an execution result of the decoloring processing. As a result of execution of the decoloring processing on a sheet, for example, that sheet becomes reusable. The value of the printing quota indicates the number of times the user can use the image processing apparatus 22.

Fig. 6 is an external view exemplifying the overall constitution of the image processing apparatus 22 according to the present embodiment.

The image processing apparatus 22 includes a display 2201, a control panel 2202, a printer section 2203, a normal sheet housing section 2204, a reusable sheet housing section 2205 and an image reading section 2206. The printer section 2203 of the image processing apparatus 22 may be a device for fixing a toner image or an inkjet type device.

The image processing apparatus 22 reads an image on a sheet and generates digital data to generate an image file. The sheet is, for example, an original document, such as a paper on which characters or images are described. The sheet may be any object as long as it can be read by the image processing apparatus 22.

The display 2201 is an image display device such as a liquid crystal display or an organic EL (Electro Luminescence) display. The display 2201 displays various information relating to the image processing apparatus 22.

The control panel 2202 has a plurality of buttons. The control panel 2202 receives an operation by a user. The control panel 2202 outputs a signal corresponding to the operation performed by the user to a controller of the image processing apparatus 22. The display 2201 and the control panel 2202 may be integrally constituted as a touch panel.

The printer section 2203 forms an image on the sheet based on image information generated by the image reading section 2206 or image information received via a communication path. The printer section 2203 forms an image by the following processing, for example. An image forming section of the printer section 2203 forms an electrostatic latent image on a photoconductive drum based on the image information. The image forming section of the printer section 2203 forms a visible image by attaching a developer to the electrostatic latent image. A specific example of the developer is a toner. A transfer section of the printer section 2203 transfers the visible image onto the sheet. A fixing section of the printer section 2203 fixes the visible image on the sheet by applying heat and pressure to the sheet. The sheet on which the image is formed may be stored in the normal sheet housing section 2204 or the reusable sheet housing section 2205 or may be manually fed.

The normal sheet housing section 2204 accommodates a sheet (hereinafter, referred to as a "normal sheet") on which the decoloring processing is never executed by the decoloring apparatus 21.

The reusable sheet housing section 2205 accommodates a sheet used for image formation in the printer section 2203. The reusable sheet housing section 2205 accommodates a sheet on which the decoloring processing is executed in advance and which is determined to be reusable (hereinafter, referred to as a "reusable sheet") by the decoloring processing 21.

When the normal sheet housing section 2204 is not distinguished from the reusable sheet housing section 2205, they are referred to as a "sheet housing section".

The sheet on which the image is to be formed is determined in response to the input by the user to the control panel 2202. Whether the image processing apparatus 22 forms an image on the normal sheet or the reusable sheet is determined according to the input by the user to the control panel 2202.

The image reading section 2206 reads the image information which is a reading object as intensity of light. The image reading section 2206 records the read image information. The recorded image information may be transmitted to another information processing apparatus via the network. The recorded image information may be used to form an image on the sheet by the printer section 2203.

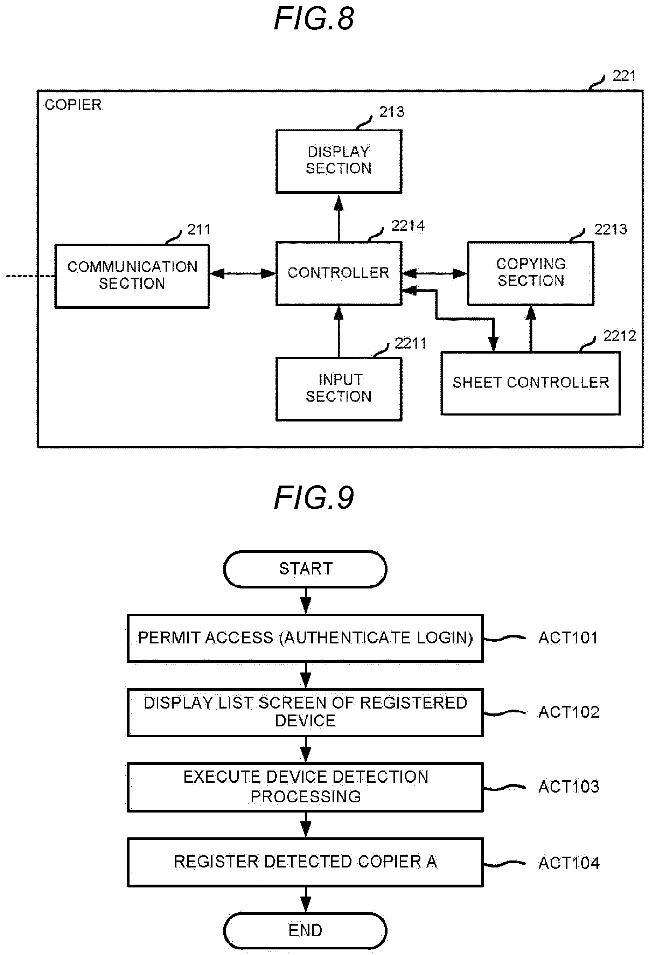

Fig. 8 is a block diagram illustrating a specific example of the functional components of the image processing apparatus 22 according to the present embodiment. Here, the functional components of the copier 221 are described as an example of the image processing apparatus 22. The copier 221 includes a CPU, a memory and an auxiliary storage device which are connected by a bus line, and executes programs. The copier 221 functions as a device including the communication section 211, the display section 213, an input section 2211, a sheet controller 2212, a copying section 2213, and a controller 2214 by executing the programs. All or a part of the functions of the copier 221 may be realized by using hardware such as an ASIC, a PLD, a FPGA or the like. The program may be recorded in a computer-readable recording medium. The computer-readable recording medium is, for example, a portable medium such as a flexible disk, a magneto-optical disk, a ROM, a CD-ROM or the like, or a storage device such as a hard disk built in a computer system. The program may be transmitted via an electric communication line.

The same functional sections as those of the decoloring apparatus 21 are denoted with the same reference numerals as those in Fig. 5, and the description thereof is omitted below.

The input section 2211 includes input devices such as a mouse, a keyboard, a touch panel, and the like. The input section 2211 receives input by the user to the input section 2211. For example, the input section 2211 receives input of formation destination sheet instruction information. The formation destination sheet instruction information is information instructing whether the copier 221 performs the copying on the sheet accommodated in the normal sheet housing section 2204 or the sheet accommodated in the reusable sheet housing section 2205. If the formation destination sheet instruction information instructs copying on the sheet accommodated in the normal sheet housing section 2204 below, the formation destination sheet instruction information is referred to as normal sheet instruction information. If the formation destination sheet instruction information instructs to perform the copying on the sheet accommodated in the reusable sheet housing section 2205 below, the formation destination sheet instruction information is referred to as reusable sheet instruction information. The input section 2211 outputs the formation destination sheet instruction information to the controller 2214 and the sheet controller 2212. The input section 2211 outputs input information by the user to the controller 2214.

The sheet controller 2212 is controlled by the controller 2214 and controls the sheet housing section based on the formation destination sheet instruction information. The sheet controller 2212 controls the sheet housing section indicated by the formation destination sheet instruction information. The sheet controller 2212 supplies a sheet in the sheet housing section to the copying section 2213.

The copying section 2213 includes various functional sections for realizing a copying processing. For example, the copying section 2213 includes functional sections such as a reading section for reading a copy source sheet, and a charging section, an exposure section, and a transfer section for forming a read image on a copy destination sheet. The copying section 2213 executes the copying processing for forming an image formed on a copy source sheet on a copy destination sheet under the control of the controller 2214.

The controller 2214 controls execution of the copying processing by the copying section 2213 based on the input information by the user output from the input section 2211. The controller 2214 may display various information relating to the copying processing on the display section 213. The controller 2214 operates in conjunction with the printing management server 1 to reduce the value of the printing quota of the user according to the execution result of the copying processing.

Although the functional components of the copier 221 are shown above as an example of the image processing apparatus 22, for the image processing apparatus 22 other than the copier 221, the constitution other than the functional sections that realize the purpose of each apparatus is the same as that of the copier 221. For example, the multi-functional peripheral 222 is different from the copier 221 in a point that it has a multi-functional peripheral functional section instead of the copying section 2213 and a controller for controlling the multi-functional peripheral functional section instead of the controller 2214 for controlling the copying section 2213. On the other hand, although the controller of each image processing apparatus 22 has a different structure regarding the control of a functional section (for example, the copying section in the copier 221) that realizes the purpose of each device, the controller of each image processing apparatus 22 has the same structure as those of other image processing apparatuses 22 regarding a usage limit function. The controller of each image processing apparatus 22 has an authentication function similar to that of the printing management server 1, and allows the authenticated user to use the image processing apparatus 22 only.

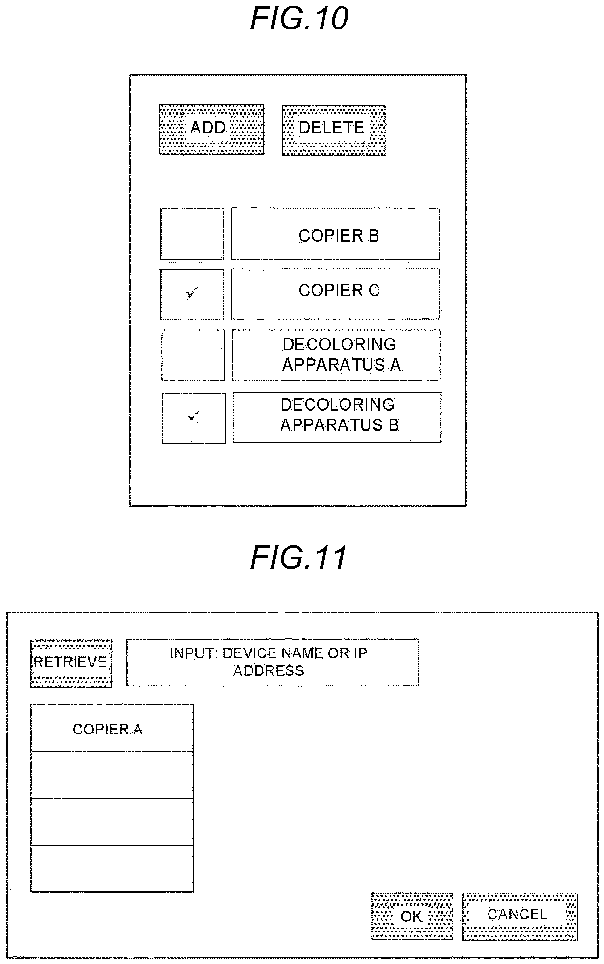

Fig. 9 is a flowchart illustrating the processing flow in which the printing management server 1 registers the management target device 2 in the printing management server 1 according to the present embodiment. Fig. 10 and Fig. 11 are diagrams exemplifying screens displayed on the user terminal 3 at the time of registering the management target device 2 according to the present embodiment. With reference to Fig. 10 and Fig. 11, the flowchart shown in Fig. 9 is described below. For example, the management target device 2 is registered by accessing the device management function of the printing management server 1 via the user terminal 3 by the user. For example, the access to the device management function is only permitted for a user who logs in the printing management server 1. In this case, the user authentication section 14 of the printing management server 1 requests the authentication information of the user to the user terminal 3 and acquires the authentication information of the user from the user terminal 3. If the authentication information acquired from the user terminal 3 is coincident with the authentication information of the user stored in the printing management server 1, the user authentication section 14 permits that the user terminal 3 accesses the device management function of the printing management server 1 (ACT 101).

Subsequently, in the printing management server 1, the device information management section 16 enables the user terminal 3 of which the access is permitted to display a list screen of the management target device 2 already registered (ACT 102). For example, the list screen as shown in Fig. 10 is displayed on the user terminal 3. By confirming the list screen, the user confirms whether or not the management target device 2 (here, the copier A) which is an object is already registered. If the copier A is already registered, the user logs out from the printing management server 1 and terminates the operation of device registration.

On the other hand, if the copier A is not registered yet as in the example in Fig. 10, the user inputs an instruction to instruct the printing management server 1 to execute a processing (hereinafter, referred to as a "device detection processing") for detecting the registrable device existing on the network. Specifically, the user enables a device retrieval screen as shown in Fig. 11 to be displayed and presses a "retrieve" button to input the execution instruction of the device detection processing. In response to the input of the execution instruction, the device detection section 17 of the printing management server 1 executes the detection processing of the registrable device (ACT 103). The device detection section 17 displays the detection result on the user terminal 3. The example in Fig. 11 indicates that the copier A is detected by the device detection processing.

After confirming the detection result, the user inputs an operation to register the detected copier A as the management target device 2. For example, by pressing an "OK" button displayed on the device retrieval screen in Fig. 11, the user instructs the device information management section 16 to register the detected device as the management target device 2. In response to the input of the registration instruction, the device information management section 16 acquires the device information from the copier A and stores the acquired device information in the device information storage section 13, thereby registering the copier A as the management target device 2 in the printing management server 1 (ACT 104).

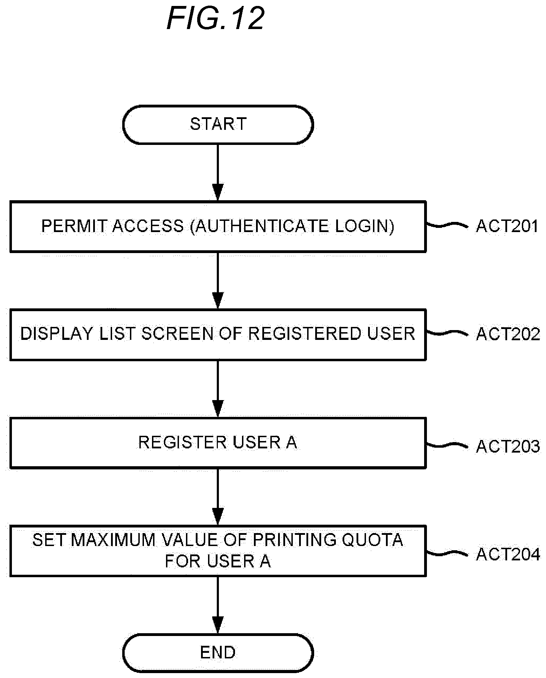

Fig. 12 is a flowchart illustrating a flow of a processing in which the printing management server 1 registers the user of the printing system 100 in the printing management server 1 according to the present embodiment. For example, registration of a user is performed by accessing the user management function of the printing management server 1 by the user via the user terminal 3 similarly to the registration of the management target device 2. In this case, the user authentication section 14 of the printing management server 1 authenticates the user in the same manner as that in a case of registering the management target device 2, and permits that the user terminal 3 accesses the user management function of the printing management server 1 (ACT 201).

Subsequently, in the printing management server 1, the user information management section 15 enables the user terminal 3 of which the access is permitted to display a list screen of the user who is already registered (ACT 202). By confirming the list screen, the user confirms whether or not the target user (user A in this case) is already registered. If the user A is already registered, the user logs out from the printing management server 1 and ends the user registration operation.

On the other hand, if the user A is not registered yet, the user inputs an operation to add the user A to the printing management server 1. Specifically, the user inputs the user information as shown in Fig. 3 for the user A. In response to this input, the user information management section 15 stores the user information of the input user A in the user information storage section 12 to register the user A as a user of the printing system 100 in the printing management server 1 (ACT 203).

Further, the user inputs an operation for setting the maximum value of the printing quota for the registered user A. In response to the input, the user information management section 15 sets the maximum value of the printing quota for the user A by adding the input maximum value of the printing quota to the user information of the user A (ACT 204).

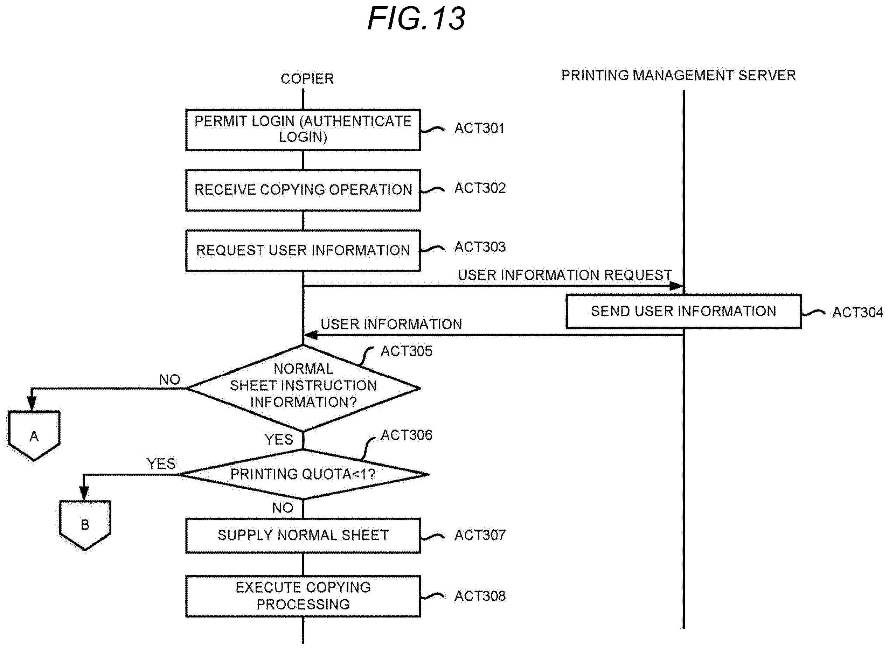

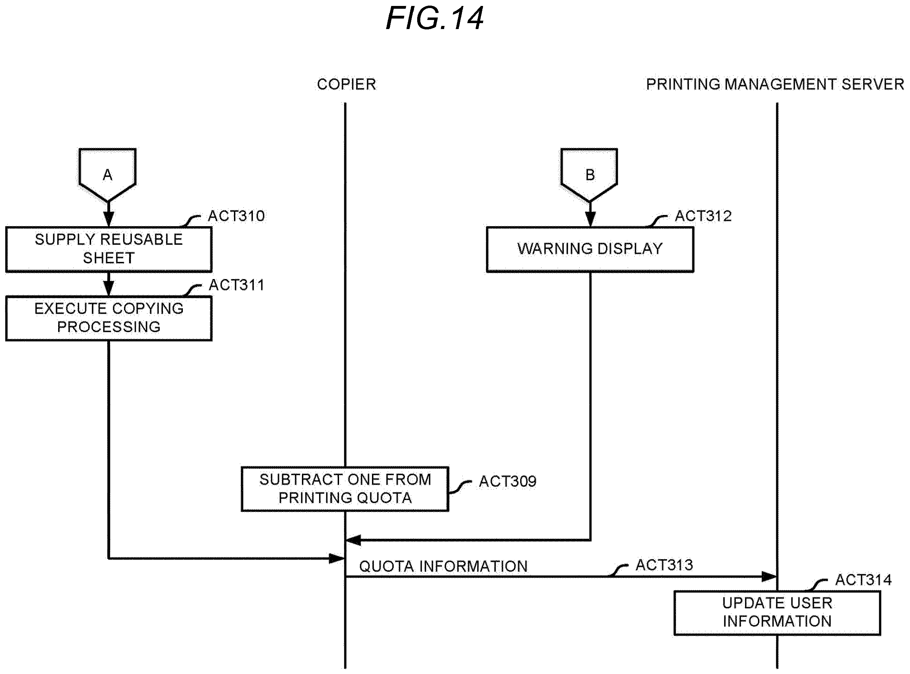

Fig. 13 and Fig. 14 are flowcharts illustrating the flow of a processing of limiting the usage amount of the management target device 2 by the user in the printing system 100 according to the present embodiment. Here, as an example, the flow of the processing executed when the user uses the copier 221 is described. First, the user inputs an operation to log in to the copier 221. For example, the user operates the input section 2211 to input his/her own authentication information (user ID and password). In response to the input, the controller 2214 determines whether or not the input authentication information is coincident with the authentication information of the user registered in advance, and permits the login of the user if they are coincident (ACT 301).

The authentication of the user in the copier 221 may be realized by storing the same user information as the printing management server 1 by the copier 221, or may be realized by requesting the printing management server 1 to execute the authentication processing by the copier 221.

The user who logs in to the copier 221 inputs an operation (hereinafter, referred to as a "copying operation") for executing a copying processing to the copier 221. For example, the controller 2214 of the copier 221 receives an input of the copying operation via the input section 2211 (ACT 302), and according to the input of the copying operation, the controller 2214 acquires the user information of the user from the printing management server 1. Specifically, the copier 221 sends a user information request to the printing management server 1 (ACT 303), and the printing management server 1 acquires the user information of the corresponding user from the user information storage section 12 in response to the user information request. The printing management server 1 transmits the acquired user information to the copier 221 (ACT 304). The copying operation also includes an operation of inputting the formation destination sheet instruction information to the copier 221 by the user.

If the user information is acquired, the controller 2214 determines whether the formation destination sheet instruction information is the normal sheet instruction information or the reusable sheet instruction information (ACT 305). If the formation destination sheet instruction information is the normal sheet instruction information (Yes in ACT 305), the controller 2214 determines whether or not the printing quota of the user is less than one (ACT 306). If the printing quota is less than 1 (Yes in ACT 306), the controller 2214 enables the display section 213 to display a warning display indicating that the copying more than the printing quota of the user is not permitted (ACT 312), and the controller 2214 terminates the processing without executing the requested copying processing.

On the other hand, if the printing quota is one or more (No in ACT 306), the controller 2214 controls the sheet controller 2212. The controller 2214 supplies the sheet accommodated in the normal sheet housing section 2204 to the copying section 2213 (ACT 307). The controller 2214 controls the copying section 2213 to execute the requested copying processing on the sheet supplied in ACT 307 (ACT 308). If the controller 2214 causes the copying section 2213 to execute the copying processing, the controller 2214 subtracts one from the printing quota of the corresponding user (ACT 309). The controller 2214 sends quota information indicating the printing quota after subtraction to the printing management server 1 (ACT 313). In the printing management server 1, based on the received quota information, the user information management section 15 updates the user information of the corresponding user (ACT 314).

On the other hand, if the formation destination sheet instruction information is the reusable sheet instruction information (No in ACT 305), the sheet controller 2212 is controlled by the controller 2214 to supply the sheet accommodated in the reusable sheet housing section 2205 to the copying section 2213 (ACT 310). The controller 2214 controls the copying section 2213 to execute the requested copying processing on the sheet supplied in ACT 310 (ACT 311).

Here, an example in which the printing quota is subtracted by one if the user performs the copying operation on the normal sheet is described; however, an example in which the printing quota is subtracted by one if the user performs a printing operation similarly. In this manner, the printing quota is subtracted according to the copying or printing operation, and in this way, the usage amount of the management target device 2 by each user can be limited.

For example, if an image is formed on a sheet upon which a prior image had been erased based on information indicating that the sheet is reusable, a first value may be subtracted from a printing quota value such that the first value is smaller than a second value that would be subtracted from the printing quota value when the image is formed on an unused sheet.

An example in which if the user performs the copying operation on the reusable sheet, the image processing apparatus 22 does not change the value of the printing quota (i.e., the reduction of the printing quota is 0) is shown; however, the image processing apparatus 22 may change the value of the printing quota. The reduction amount of the printing quota in a case in which the user performs the copying operation on the reusable sheet may be any value as long as it is smaller than the reduction amount in a case in which the user performs the copying operation on the normal sheet. For example, the reduction amount of the printing quota in a case in which the user performs the copying operation on the reusable sheet may be 0.5. In such a case, the controller 2214 may determine that the quota number is equal to or greater than 0.5, before the copying processing by the copying section 2213 is performed. The controller 2214 may display a warning on the display section 213 if the printing quota at the time of acquiring the reusable sheet instruction information is 0.

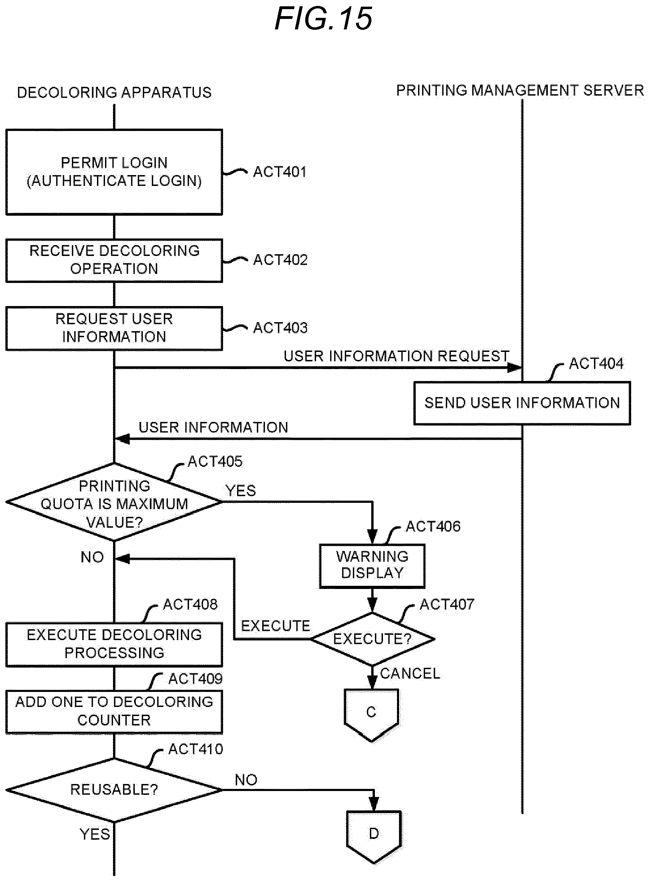

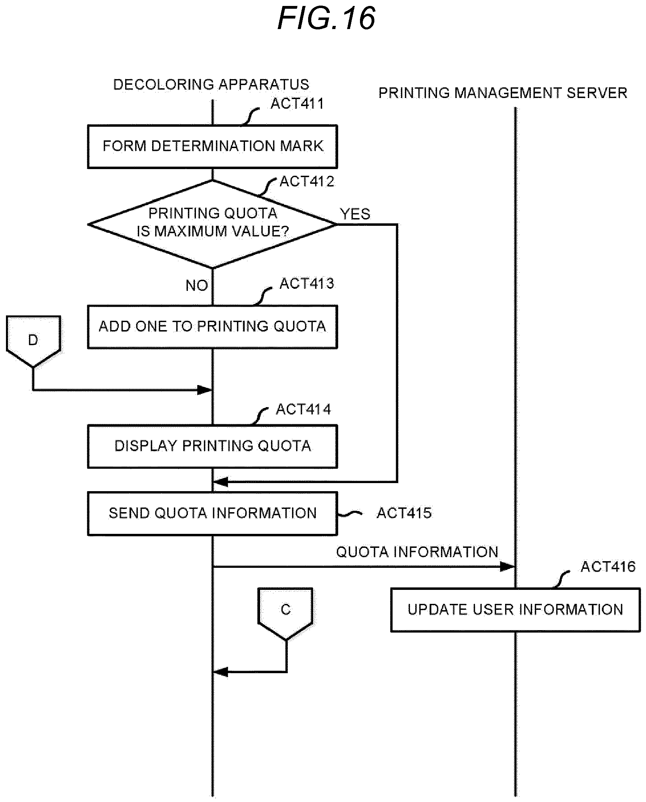

Fig. 15 and Fig. 16 are flowcharts illustrating the flow of the decoloring processing in the printing system 100 according to the present embodiment. First, the user inputs an operation to log in to the decoloring apparatus 21. In response to the input, the decoloring apparatus 21 authenticates the user in the same manner as that by the copier 221 and permits the authenticated user to log in to the decoloring apparatus 21 (ACT 401).

The user who logs in to the decoloring apparatus 21 inputs an operation (hereinafter, referred to as a "decoloring operation") for executing the decoloring processing to the decoloring apparatus 21. For example, the controller 216 of the decoloring apparatus 21 receives the input of the decoloring operation via the input section 212 (ACT 402), and acquires the user information of the corresponding user from the printing management server 1 in response to the input of the decoloring operation. Specifically, the decoloring apparatus 21 transmits the user information request to the printing management server 1 (ACT 403), and the printing management server 1 acquires the user information of the corresponding user from the user information storage section 12 in response to the reception of the user information request. The printing management server 1 sends the acquired user information to the decoloring apparatus 21 (ACT 404).

If the user information is acquired, the controller 216 of the decoloring apparatus 21 determines whether or not the printing quota of the corresponding user is the maximum value (20 in the example in Fig. 4(C)) (ACT 405). If the printing quota is the maximum value (Yes in ACT 405), the controller displays, on the display section 213, a warning display indicating that the printing quota of the corresponding user is the maximum value and the printing quota is not increased even if the decoloring operation is executed (ACT 406), and displays a display for selecting whether to execute the decoloring processing on the display section 213.

The controller 216 determines the selection by the user (ACT 407). If the user selects non-execution of the decoloring processing (ACT 407: Cancel), the controller 216 terminates the processing without executing the decoloring processing. On the other hand, if the user selects the execution of the decoloring processing (ACT 407: execute), the controller 216 controls the decoloring section 214 which realizes the decoloring processing to execute the requested decoloring processing (ACT 408). If the controller 216 enables the decoloring section 214 to execute the decoloring processing, the controller 216 adds one to the decoloring counter of the corresponding user (ACT 409).

Subsequently, the reading section 2151 reads the sheet and generates the image data. Based on the image data, the determining section 2152 determines whether or not the sheet on which the decoloring processing is already executed is reusable (ACT 410). If the sheet is reusable (Yes in ACT 410), the controller 216 controls the mark forming section 2153 to form the determination mark on the sheet on which the decoloring processing is executed (ACT 411).

Subsequently, the controller 216 determines whether or not the printing quota of the user is the maximum value (ACT 412). If the printing quota is not the maximum value (No in ACT 412), the controller 216 adds one to the printing quota (ACT 413) and displays the value of the printing quota after addition on the display section (ACT 414). The controller sends the quota information indicating the printing quota or the decoloring counter after updating to the printing management server 1 (ACT 415). On the other hand, if the printing quota is the maximum value (Yes in ACT 412), the controller 216 does not perform the addition of the printing quota and proceeds to the processing in ACT 415. In the printing management server 1, based on the received quota information, the user information management section 15 updates the user information of the corresponding user (ACT 416).

On the other hand, in ACT 410, if it is determined that the sheet is a non-reusable sheet (No in ACT 410), the controller 216 does not execute the addition of the printing quota and proceeds to the processing in ACT 414.

An example in which the printing quota is not added if the sheet is not reusable is shown here. However, the printing quota does not have to necessarily keep the current value if the sheet is not reusable. If the sheet is not reusable, the printing quota may be increased by a smaller value than that in a case in which the sheet is reusable. For example, if the sheet is not reusable, the printing quota may be added by 0.5. In other words, when a sheet upon which a prior image had been erased is not reusable, a printing quota value may be increased by a third value such that the third value is smaller than a fourth value that would be increased to the printing quota value when the sheet upon which the prior image had been erased is reusable. Thus, by controlling the printing quota in such a manner that the printing quota is increased in response to the decoloring operation of the sheet, the printing system 100 of the embodiment can give an incentive to use the image forming apparatus for the user who reuses the sheet.

In the printing system 100 of the present embodiment as described herein, if an image is formed on the reusable sheet, the value of the printing quota is reduced only by a value smaller than the amount of reduction in a case of forming an image on the normal sheet. With such a constitution, the printing system 100 of the embodiment can give the incentive to use the image forming apparatus for the user who reuses the sheet.

In the printing system 100 of the present embodiment, the printing quota of each user is managed so as not to exceed a predetermined maximum value. By such printing quota management, the printing system 100 of the embodiment can give the incentive within a predetermined range to the user who reuses the sheet.

Hereinafter, modifications of the previously described embodiment of the printing system 100 are described below.

In the previously described embodiment, the addition or subtraction of the printing quota is performed by the controller of the management target device 2; however, various kinds of calculation relating to the printing quota may be performed at the printing management server 1 side. In the previously described embodiment, the determination processing of the printing quota and various display processing according to the determination result are executed or controlled by the controller of the management target device 2; however, each processing may be executed or controlled at the printing management server 1 side. In this case, for example, the user information management section 15 of the printing management server 1 may subtract one from the printing quota in response to the execution of the copying processing by the copier 221 or the execution of the printing processing by the multi-functional peripheral 222, and add one to the printing quota in response to the execution of the decoloring processing by the decoloring apparatus 21. For example, the user information management section 15 of the printing management server 1 may instruct the management target device 2 to execute the printing processing, the copying processing, the decoloring processing or various display processing according to the value of the printing quota before updating or after updating.

In the previously described embodiment, the printing quota is managed within a range not exceeding a preset maximum value. However, if it is desired to give more incentive to the user who reuses the sheet, it may be permitted that the printing quota after addition exceeds the maximum value. If the printing quota exceeds the maximum value due to the addition, an excessive amount of the printing quota may be added to other quota. For example, if a quota (hereinafter, referred to as a "scan quota") that limits the number of times of the use of the reading function of the multi-functional peripheral 222 is provided, the amount exceeding the maximum value of the printing quota with respect to the maximum value may be added to the scan quota. In a case in which the printing quota is provided for each printing type such as a color printing or a monochrome printing, for example, the excessive amount of the printing quota of the color printing may be added to the printing quota of another printing type such as the monochrome printing.

In the previously described embodiment, the printing system 100 for managing the usage amount for each user is described, but the usage amount may be managed in other units. For example, the usage amount may be managed, for example, in units of departments instead of individual users. In this case, the printing quota is provided for each department, and the printing quota may be managed according to the usage status of a user belonging to the department.

The user information management section 15 of the printing management server 1 may have a function of updating the user information of each user based on an input from an external device. In this case, the system administrator can log in to the printing management server 1 and directly edit the printing quota and its maximum value for the user. The maximum value of the printing quota may be set as a common value for all the users or may be set as a different value for each user.

In the previously described embodiment, the amount of change in the printing quota at the time of executing the decoloring processing is irrelevant to a size of the sheet on which the image is decolorized. However, the amount of change in the printing quota may vary depending on the size of the sheet. For example, if the decoloring processing is executed on a sheet of A4 size, the value of the printing quota is increased by one. If the decoloring processing is executed on a sheet of A3 size, the value of the printing quota is increased by two.

The reusable sheet housing section 2205 is an example of a first housing section and the normal sheet housing section 2204 is an example of a second housing section. The normal sheet is an example of an unused sheet.

According to at least one embodiment described above, by providing a management section for increasing the value of the printing quota indicating a usable amount of the image forming apparatus for each user based on the usage amount of the reusable sheet by the user (e.g., the copier 221 and the multi-functional peripheral 222), it is possible to give the incentive to use the image forming apparatus for the user who reuses the sheet.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the scope of the inventions. The accompanying claims and their equivalents are intended to cover such forms or modifications as would fall within the scope of the invention.

## Claims

1. A quota management apparatus, comprising:
a management section configured to manage a printing quota value indicating an amount of permitted use of an image forming apparatus by a user according to an image forming instruction by the user;
wherein if the image forming apparatus forms an image on a sheet upon which a prior image had been erased based on information indicating that the sheet is reusable, the management section performs either:
an operation of subtracting a first value from the printing quota value, wherein the first value is smaller than a second value that would be subtracted from the printing quota value when the image forming apparatus forms the image on an unused sheet, or
an operation of not subtracting from the printing quota value of the printing quota.

2. The quota management apparatus according to claim 1, wherein the management section is configured to increase the printing quota value of the user according to a usage amount if the user uses a decoloring apparatus for erasing images on sheets.

3. The quota management apparatus according to claim 2, further comprising:
a determining section configured to determine whether the sheet upon which the prior image had been erased by the decoloring apparatus is reusable.

4. The quota management apparatus according to claim 3, wherein when the determining section determines that the sheet upon which the prior image had been erased is not reusable, the management section is configured to increase the printing quota value by a third value, where the third value is smaller than a fourth value that would be increased to the printing quota value when the determining section determines that the sheet upon which the prior image had been erased is reusable.

5. The quota management apparatus according to claim 4, wherein when the determining section determines that the sheet upon which the prior image had been erased is not reusable, the management section is configured to increase the printing quota value of the user of the decoloring apparatus by the third value, where the third value is smaller than an added value of the printing quota value of the user when the determining section determines that the sheet upon which the prior image had been erased is reusable.

6. The quota management apparatus according to any one of claims 1 to5, wherein the management section is configured to increase the printing quota value within a range not exceeding a predetermined maximum amount.

7. The quota management apparatus according to any one of claims 1 to 6, wherein the management section is configured to enable the image forming apparatus to display information related to the printing quota value of each user.

8. The quota management apparatus according to any one of claims 1 to 7, further comprising:
a first housing section configured to accommodate a sheet upon which the prior image had been erased by a decoloring apparatus; and
a second housing section configured to accommodate a sheet upon which the prior image had not been erased by the decoloring apparatus,
wherein if the image is formed on a sheet supplied from the first housing section, the management section performs either:
a control of subtracting the first value from the printing quota value, with the first value being smaller than the second value where the image is formed on the sheet supplied from the second housing section or
a control of not subtracting from the printing quota value is performed.

9. A quota management method, including:
managing a printing quota value indicating a usable amount of an image forming apparatus by a user according to an image forming instruction by the user,
wherein if the image forming apparatus forms an image on a sheet upon which a prior image had been erased, performing either:
a step of subtracting a first value from the printing quota value, with the first value being smaller than a second value where the image forming apparatus forms the image on a sheet on which erasing of the prior image is not executed, or
a step of not subtracting from the printing quota value.

10. The quota management method according to claim 9, further comprising:
increasing the printing quota value of the user according to a usage amount if the user uses a decoloring apparatus for erasing images on sheets.

11. The quota management method according to claim 10, further comprising:
determining whether the sheet upon which the prior image had been erased by the decoloring apparatus is reusable.

12. The quota management method according to claim 11, wherein when the sheet upon which the prior image had been erased is not reusable,
increasing the printing quota value by a third value, where the third value is smaller than a fourth value when the sheet upon which the prior image had been erased is reusable.

13. The quota management method according to claim 12, wherein when the sheet upon which the prior image had been erased is not reusable,
increasing the printing quota value of the user of the decoloring apparatus by the third value, where the third value is smaller than the fourth value of the printing quota value of the user when the sheet upon which the prior image had been erased is reusable.

14. The quota management method according to any one of claims 9 to 13, further comprising:
increasing the printing quota value within a range not exceeding a predetermined maximum amount.

15. A non-transitory, computer readable recording medium configured to enable a computer to execute the method according to any one of claims 9 to 14.
